# EUROPEAN PATENT SPECIFICATION

(11) **EP 2 932 870 B1**
(45) Date of publication and mention of the grant of the patent: **28.07.2021**
(21) Application number: 15163310.4
(22) Date of filing: 13.04.2015
(51) Int. Cl.: A47B 13/00, A47B 13/06, F16B 12/34

(54) **OFFICE DESK**
BÜROSCHREIBTISCH
TABLE DE BUREAU

(30) Priority: 15.04.2014 NL 2012624
(43) Date of publication of application: 21.10.2015
(73) Proprietor: Koninklijke Ahrend B.V., 1101 EB Amsterdam (NL)
(72) Inventor: Van Bakel, Petrus Antonius Laurentius, 5492 VC Sint Oedenrode (NL)
(74) Representative: Van Breda, Jacobus

(56) References cited:
- EP-A1- 1 380 228
- FR-A1- 2 636 822
- FR-A1- 2 907 857
- US-A- 4 317 416
- None

## Description

The invention relates to an office desk embodied with supporting legs and a frame to which the supporting legs are connected or connectable, wherein the frame comprises multiple beams for supporting a tabletop, and wherein there are means for mounting the tabletop to the frame in a fixed position.

The not pre-published Dutch patent application NL 2011589 describes an office desk embodied with supporting legs and a frame to which the supporting legs are connected or connectable, and wherein the frame comprises multiple beams for supporting a tabletop. As is also the case with office desks according to the prior art the tabletop must be fixed into position to the frame. For this purpose conventionally screws or bolts and nuts are used. This requires that tools are used for any repositioning of the tabletop, which is therefore relatively cumbersome.

EP-A-1 008 315 discloses a desk comprising a frame which supports a top plate. The top plate can be fixed to the frame members by steps of fixing five pieces of the mounting members to the front and back positions of each of the side frame members and the center of the reinforcing frame member, placing the top plate on the mounting face of the mounting members and screwing a screw from underside of the top plate through a through hole which is provided at the mounting surface.

EP-A- 1 380 228 and FR-A- 2 636 822 each disclose the subject matter according to the preamble of claim 1.

US 4,317,416 discloses a desktop provided with a pedestal wherein the desktop and the pedestal are connected by means of studs on the underside of the desktop projecting through correspondingly located slots on the pedestal.

FR-A-2 907 857 discloses cooperating male and female members wherein the female members have a slot with varying diameter for releasing or restricting movement of the male member. The male and female member thus provide a connection between two elements such as a tabletop and a foot therefore with which the male and female member are connected.

It is an object of the invention to obviate the need to apply tools when repositioning of the tabletop, and make such repositioning more easy.

According to the invention an office desk as well as a mounting block for the tabletop of the office desk are proposed in accordance with one or more of the appended claims.

According to a first aspect the office desk of the invention is embodied with the features of claim 1.

Beneficial features of the office desk of the invention are provided in the dependent claims.

Corresponding to what is known from EP-A-1 380 228 and FR-A- 2 636 822 the office desk of the invention has supporting legs and a frame to which the supporting legs are connected or connectable, wherein the frame comprises multiple beams for supporting a tabletop, wherein there are means for mounting the tabletop to the frame in a fixed position, wherein the means for mounting the tabletop to the frame comprises first and second fixing means that are connected or connectable to the frame and tabletop respectively, and wherein the second fixing means is embodied as a pin comprising a neck and an extremity mounted on said neck at a side of the pin which is distant from the tabletop, which extremity has a larger diameter than said neck of the pin, and the first fixing means comprises a connector which is provided with an aperture, a first part of which aperture has dimensions smaller than the extremity mounted on the neck of the pin, and a second part of which aperture has dimensions larger than the extremity mounted on the neck of the pin and which connector is equipped to slide transversely along the neck of the pin to a position wherein the first part of the aperture restricts movement of the extremity of the pin and thus provides a connection between the first and second fixing means.

Further corresponding to what is known from EP-A-1 380 228 and FR-A- 2 636 822, the first fixing means are connected or connectable to the frame and the second fixing means are connected or connectable to the tabletop, wherein said first fixing means and said second fixing means are arranged to be movable between a first position in which the first fixing means and second fixing means are connected, and a second position in which the first fixing means and second fixing means are disconnected. In this way simply changing between the first position and the second position arranges for connecting and disconnecting the tabletop from the frame.

The first fixing means are embodied as a mounting block which is connected or connectable to the frame, which mounting block is provided with an aperture for receiving therein the second fixing means which is connected or connectable to the tabletop. The mounting block can be arranged as an easily replaceable piece of equipment which can be applied in connection with the frame to make the connection with a tabletop easy.

The beams of the frame have one or more openings which are dimensioned to receive the mounting block or mounting blocks. After completing the frame with such mounting blocks it requires little effort to mount the tabletop to the frame.

In connection with the intention of the invention to arrange for a simple mounting of the tabletop to the frame the connector is slidable within a body of the mounting block in which it is received to arrange that its aperture is movable between the first position in which the first part of the connector's aperture is brought into blocking engagement with the extremity of the pin wherein the mounting block and the pin are connected, and the second position in which the second part of the connector's aperture is brought into line with the extremity on the neck of the pin wherein the mounting block and the pin are disconnected. Advantageously the connector is slidably received in a body of the mounting block, and the aperture of the mounting block is equipped to snugly receive therein said pin comprising a neck and an extremity mounted on said neck. Any undesirable play in the position of the tabletop with reference to the frame can thus be avoided.

A further preferable feature is that the connector is equipped with a projecting part which clicks behind an outer surface of the mounting block when the connector is placed into the first position in which the first part of the connector's aperture is brought into blocking engagement with the extremity of the pin wherein the mounting block and the pin are connected, so as to prevent movement of the connector away from this first position.

According to another aspect of the invention which may be applied independent from any of the other features disclosed herein, the supporting legs are connected with beams of the frame with connectors, preferably screw connectors, extending through the concerning beams and into extensions on top of the upstanding supporting legs at an angle of approximately 45° with reference to said upstanding supporting legs. This provides a very stable construction of the office desk of the invention.

The invention will hereinafter be further elucidated with reference to an exemplary embodiment of an office desk of the invention as shown in the attached drawing, which embodiment is not limiting as to the appended claims.

In the drawing:
- figures 1 - 3 shows a series of stages in mounting a tabletop to a frame of an office desk according to the invention; and
- figure 4 shows an exploded view of a mounting body, a connector and a pin that are used to mount a tabletop to the frame of an office desk.
Whenever in the figures the same reference numerals are applied, these numerals refer to the same parts.

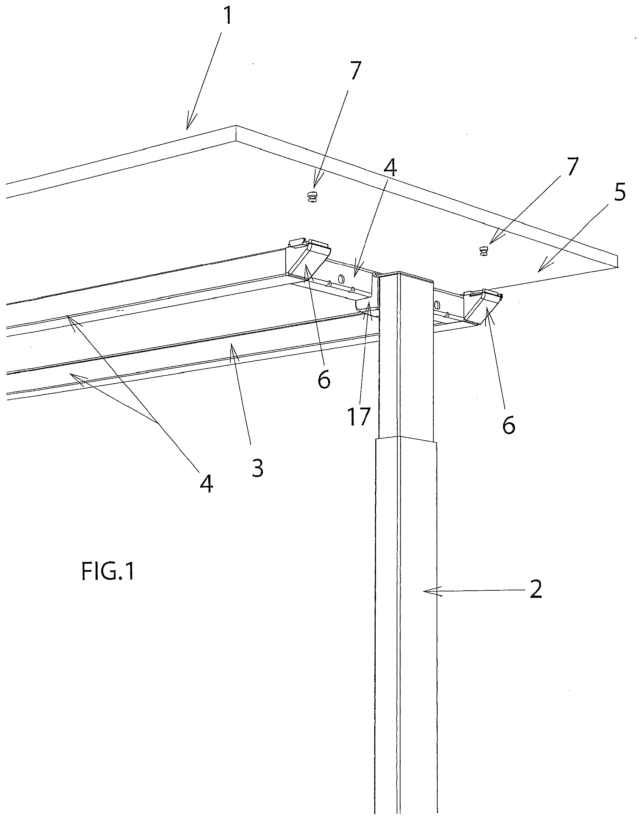

Making first reference to figure 1, a part of an office desk 1 is shown that is embodied with supporting legs 2 and a frame 3 to which the supporting legs 2 are connected or connectable. The frame 3 comprises multiple beams 4 for supporting a tabletop 5, and there are means 6, 7 for mounting the tabletop 5 to the frame 3 in a fixed position, which comprise first 6 and second 7 fixing means that are connected or connectable to the frame 3 and tabletop 5 respectively. The first fixing means 6 are connected or connectable to the frame 3 and the second fixing means 7 are connected or connectable to the tabletop 5.

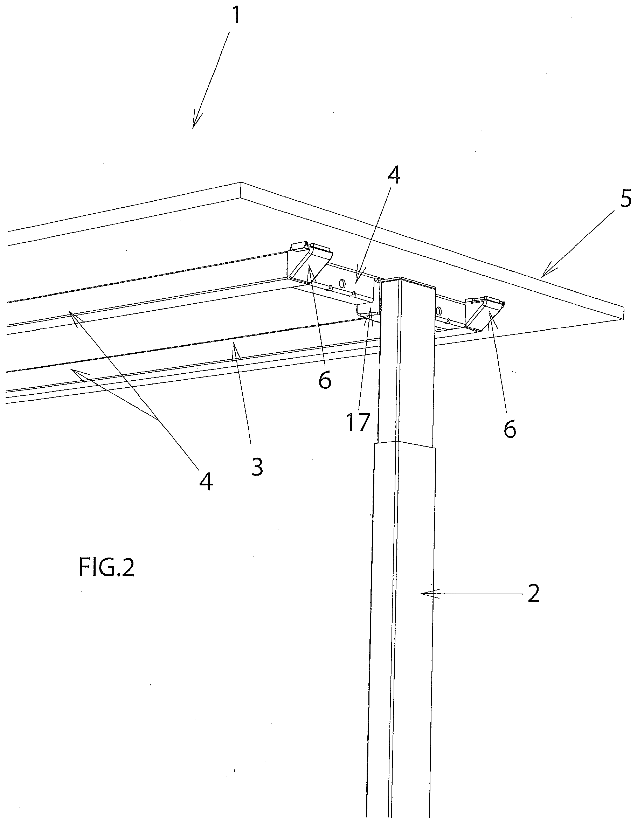

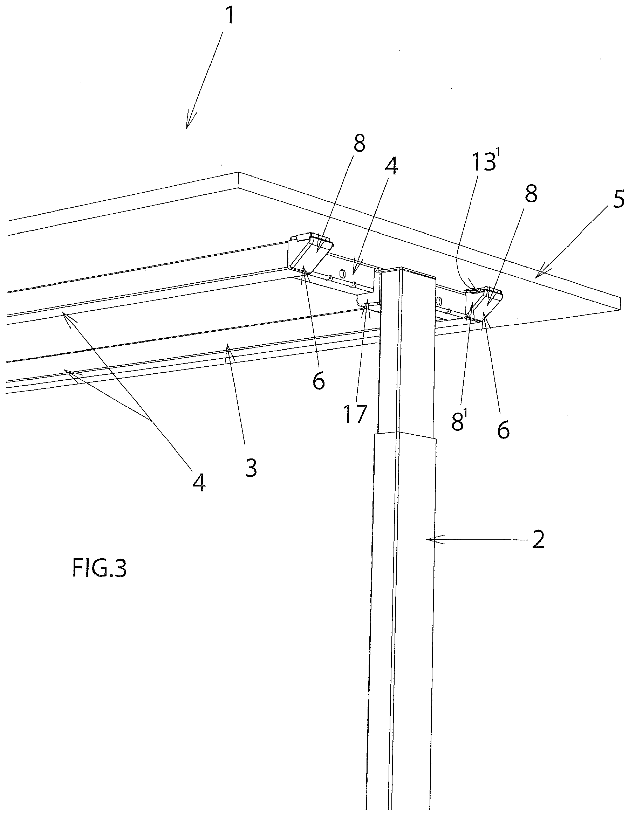

Said first fixing means 6 and said second fixing means 7 are arranged to be movable. Figure 1 shows the situation in which the first fixing means 6 and second fixing means 7 are disconnected and the tabletop 5 is loose from the frame 3. From there it can be moved to a position in which the tabletop 5 rests loose on the frame 3 so that it can still be raised. This is shown in figure 2. After reaching the position of figure 2 the first fixing means 6 and second fixing means 7 are connected, which is shown in figure 3. In that situation the tabletop 5 cannot be raised anymore from the frame 3. Removing of a tabletop 5 from the frame 3 can be performed in reverse manner as will become clear from the following description. The manner of how the connection is implemented will also become clear from the following description.

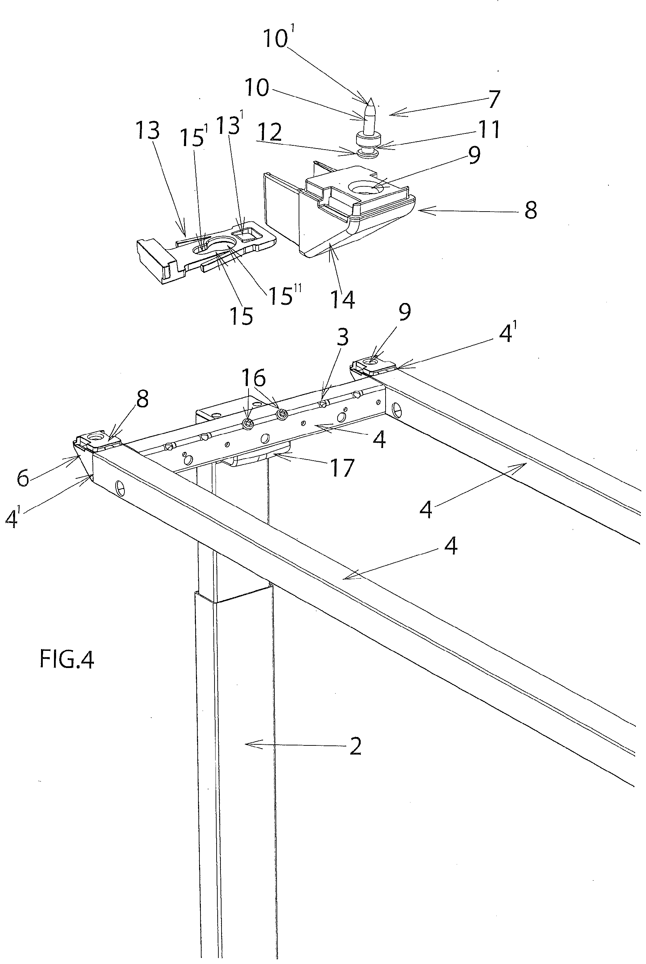

In the detailed exploded view of figure 4 it is shown that the first fixing means 6 are embodied as a mounting block 8 which is connected or connectable to the frame 3, which mounting block 8 is provided with an aperture 9 for receiving therein the second fixing means 7 which is connected or connectable to the tabletop 5. As figure 4 shows the second fixing means 7 is preferably embodied as a pin 10 comprising a neck 11 and an extremity 12 mounted on said neck 11 at a side of the pin 10 which is distant from the tabletop 5. The top part 10' of the pin 10 is intended to be screwed to the underside of a tabletop 5.

The extremity 12 of the pin 10 has as figure 4 shows a larger diameter than said neck 11 of the pin 10. This construction with the enlarged diameter extremity is intended to cooperate with the first fixing means 6, notably the mounting block 8 which comprises a connector 13 which is equipped to slide transversely along the neck 11 of the pin 10 to a position in which it restricts movement of the extremity 12 of the pin 10 and thus provide a connection between the first 6 and second 7 fixing means.

An effective embodiment to realize the aforementioned connection is one in which the connector 13 is slidably received in a body 14 of the mounting block 8. With the connector 13 slided into the appropriate position in the body 14 of the mounting block 8, the aperture 15 provided in the connector 13 is brought in line with the aperture 9 of the mounting block 8. The aperture 15 that is provided in the connector 13 and the aperture 9 of the mounting block 8 are equipped and then placed in the appropriate position to snugly receive therein said pin 10 that is connected to the tabletop 5 and which comprises a neck 11 and an extremity 12 mounted on said neck 11. To realize the connection the connector 13 is provided with the earlier mentioned aperture 15, a first part 15' of which aperture 15 has dimensions smaller than the extremity 12 mounted on the neck 11 of the pin 10, and a second part 15" of which aperture 15 has dimensions larger than the extremity 12 mounted on the neck 11 of the pin 10. Due to the fact that the connector 13 is slidable within the body 14 of the mounting block 8 in which it is received, it is arranged that the connector's aperture 15 is movable between the first position in which the first part 15' of the connector's aperture 15 is brought into blocking engagement with the extremity 12 of the pin 10 wherein the mounting block 8 and the pin 10 are connected, and the second position in which the second part 15" of the connector's aperture 15 is brought into line with the extremity 12 on the neck 11 of the pin 10 and wherein the mounting block 8 and the pin 10 are disconnected. One of the beauties of the invention is that not only mounting a tabletop to a frame can be executed quick and easy without any tools by moving the connector's aperture to said first position, but also dismounting the tabletop from the frame can be executed quick and easy without any tools in the reverse order by moving the connector's aperture to said second position.

It is further clear from figure 4 that the beams 4 of the frame 3 have one or more openings 4' which are dimensioned to receive said mounting block or mounting blocks 8.

Another feature that figure 4 shows is that the connector 13 is equipped with a projecting part 13'. In figure 3 it is shown that this projecting part 13' clicks behind an outer surface 8' of the mounting block 8 when the connector 13 is placed into the first position in which the first part of the connector's aperture 15' is brought into blocking engagement with the extremity 12 of the pin 10 wherein the mounting block 8 and the pin 10 are connected, so as to prevent movement of the connector 13 away from this first position shown in figure 3. If it is desired to release the tabletop 5 from the frame 3, the projecting part 13' can be pushed out of contact with the outer surface 8' of the mounting block 8, so as to enable that the connector 13 is moved to a position in which the second part 15" of the connector's aperture 15 is brought into line with the extremity 12 on the neck 11 of the pin 10 so that the mounting block 8 and the pin 10 are disconnected and removal of the tabletop 5 from the frame 3 is possible.

Finally with reference to figure 4 it is shown that the supporting legs 2 are connected with side beams 4 of the frame 3 with screw connectors 16 extending through the concerning beams 4 and into extensions 17 on top of the supporting legs 2 at an angle of approximately 45° with reference to the upstanding supporting legs 2. This provides a very stable construction of the frame 3 mounted on the supporting legs 2.

Although the invention has been discussed in the foregoing with reference to an exemplary embodiment of the office desk and mounting block of the invention, the invention is not restricted to this particular embodiment which can be varied in many ways without departing from the gist of the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. Office desk (1) embodied with supporting legs (2) and a frame (3) to which the supporting legs (2) are connected or connectable, wherein the frame (3) comprises multiple beams (4) for supporting a tabletop (5), wherein there are means (6, 7) for mounting the tabletop (5) to the frame (3) in a fixed position comprising first (6) and second (7) fixing means that are connected to the frame (3) and tabletop (5) respectively, wherein said first fixing means (6) and said second fixing means (7) are arranged to be movable between a first position in which the first fixing means (6) and second fixing means (7) are connected, and a second position in which the first fixing means (6) and second fixing means (7) are disconnected, wherein the first fixing means (6) are embodied as a mounting block (8) which is connected to the frame (3), said mounting block (8) being provided with an aperture (9) for receiving therein the second fixing means (7) which is connected to the tabletop (5), said second fixing means (7) being embodied as a pin (10) comprising a neck (11) and an extremity (12) mounted on said neck (11) at a side of the pin (10) which is distant from the tabletop (5), which extremity (12) has a larger diameter than said neck (11) of the pin (10), wherein the first fixing means (6) comprises a connector (13) which is provided with an aperture (15), a first part (15') of which aperture (15) has dimensions smaller than the extremity (12) mounted on the neck (11) of the pin (10), and a second part (15") of which aperture (15) has dimensions larger than the extremity (12) mounted on the neck (11) of the pin (10) and which connector (13) is equipped to slide transversely along the neck (11) of the pin (10) to the first position wherein the first part (15') of the aperture (15) restricts movement of the extremity (12) of the pin (10) and thus provides a connection between the first (6) and second (7) fixing means , wherein the beams (4) of the frame (3) have one or more openings (4') which are dimensioned to receive said mounting block or mounting blocks (8), **characterized in that** the connector (13) is slidable within a body (14) of the mounting block (8) in which it is received to arrange that its aperture (15) is movable between the first position in which the first part (15') of the connector's aperture (15) is brought into blocking engagement with the extremity (12) of the pin (10) wherein the mounting block (8) and the pin (10) are connected, and the second position in which the second part (15") of the connector's aperture (15) is brought into line with the extremity (12) on the neck (11) of the pin (10) wherein the mounting block (8) and the pin (10) are disconnected.

2. Office desk (1) according to claim 1, **characterized in that** the connector (13) is slidably received in a body (14) of the mounting block (8), and the aperture (9) of the mounting block (8) is equipped to snugly receive therein said pin (10) comprising a neck (11) and an extremity (12) mounted on said neck (11).

3. Office desk (1) according to claim 1 or 2, **characterized in that** the connector (13) is equipped with a projecting part (13') which clicks behind an outer surface (8') of the mounting block (8) when the connector (13) is placed into the first position in which the first part (15') of the connector's aperture (15) is brought into blocking engagement with the extremity (12) of the pin (10) wherein the mounting block (8) and the pin (10) are connected, so as to prevent movement of the connector (13) away from this first position.

4. Office desk (1) according to any one of the previous claims 1 - 3, **characterized in that** the supporting legs (2) are connected with beams (4) of the frame (3) with connectors, preferably screw connectors (16), extending through the concerning beams (4) and into extensions (17) on top of the upstanding supporting legs (2) at an angle of approximately 45° with reference to said upstanding supporting legs (2) .

## Patentansprüche

1. Bürotisch (1), der mit Stützbeinen (2) und einem Rahmen (3), mit welchem die Stützbeine verbunden oder verbindbar sind, ausgebildet ist, wobei der Rahmen (3) mehrere Balken (4) zum Stützen einer Tischplatte (5) umfasst, wobei Mittel (6, 7) zum Befestigen der Tischplatte (5) an dem Rahmen in einer festen Position vorhanden sind, die erste (6) und zweite (7) Befestigungsmittel umfassen, die mit dem Rahmen (3) beziehungsweise der Tischplatte (5) verbunden sind, wobei die besagten ersten Befestigungsmittel (6) und die besagten zweiten Befestigungsmittel (7) angeordnet sind, zwischen einer ersten Position, in welcher die ersten Befestigungsmittel (6) und die zweiten Befestigungsmittel (7) miteinander verbunden sind, und einer zweiten Position beweglich zu sein, in welcher die ersten Befestigungsmittel (6) und die zweiten Befestigungsmittel (7) voneinander getrennt sind, wobei die ersten Befestigungsmittel (6) als ein Montageblock (8) ausgebildet sind, welcher mit dem Rahmen (3) verbunden ist, wobei der besagte Montageblock (8) mit einer Öffnung zum Aufnehmen der zweiten Befestigungsmittel (7) darin versehen ist, welcher mit der Tischplatte (5) verbunden ist, wobei die zweiten Befestigungsmittel (7) als ein Stift (10) ausgebildet sind, der einen Hals (11) und ein Ende (12) aufweist, das an dem besagten Hals (11) an einer Seite des Stifts (10) angebracht ist, welche von der Tischplatte (5) entfernt ist, wobei das Ende (12) einen größeren Durchmesser als der Hals (11) des Stifts (10) aufweist, wobei das erste Befestigungsmittel (6) einen Verbinder (13) aufweist, welcher mit einer Öffnung (15) versehen ist, wobei ein erster Teil (15') dieser Öffnung (15) kleinere Abmessungen als das am Hals (11) des Stifts (10) angebrachte Ende (12) aufweist und ein zweiter Teil (15") dieser Öffnung (15) größere Abmessungen als das am Hals (11) des Stifts (10) angebrachte Ende (12) aufweist, und welcher Verbinder (13) ausgestattet ist, quer entlang des Halses (11) des Stifts (10) in die erste Position zu gleiten, wobei der erste Teil (15') der Öffnung (15) eine Bewegung des Endes des Stifts (10) einschränkt und somit eine Verbindung zwischen den ersten (6) und den zweiten (7) Befestigungsmitteln bereitstellt, wobei die Balken (4) des Rahmens (3) eine oder mehrere Öffnungen (4') aufweisen, welche so dimensioniert sind, dass sie den besagten Befestigungsblock oder die Befestigungsblöcke (8) aufnehmen, **dadurch gekennzeichnet, dass** der Verbinder (13) innerhalb eines Körpers (14) des Montageblocks (8), in welchem er aufgenommen ist, verschiebbar ist, um zu arrangieren, dass seine Öffnung (15) zwischen der ersten Position, in welcher der erste Teil (15') der Öffnung (15) des Verbinders in blockierenden Eingriff mit dem Ende (12) des Stifts (10) gebracht ist, in dem der Montageblock (8) und der Stift (10) verbunden sind, und der zweiten Position, in welcher der zweite Teil (15") der Öffnung (15) des Verbinders in eine Linie mit dem Ende (12) am Hals (11) des Stifts (10) gebracht wird, wobei der Montageblock (8) und der Stift (10) getrennt sind.

2. Bürotisch (1) nach Anspruch 1, **dadurch gekennzeichnet, dass** der Verbinder (13) verschiebbar in einem Körper (14) des Montageblocks (8) aufgenommen ist und die Öffnung (9) des Montageblocks (8) ausgestattet ist, den besagten Stift (10), der einen Hals (11) und ein an dem Hals (11) angebrachtes Ende (12) umfasst, passgenau darin aufzunehmen.

3. Bürotisch (1) nach Anspruch 1 oder 2, **dadurch gekennzeichnet, dass** der Verbinder (13) mit einem vorstehenden Teil (13') ausgestattet ist, welches hinter einer Außenfläche (8') des Montageblocks (8) einrastet, wenn der Verbinder (13) in die erste Position gebracht ist, in welcher der erste Teil (15') der Öffnung (15) des Verbinders in blockierenden Eingriff mit dem Ende (12) des Stifts (10) gebracht ist, wobei der Montageblock (8) und der Stift (10) verbunden sind, so dass eine Bewegung des Verbinders (13) weg von dieser ersten Position verhindert wird.

4. Bürotisch (1) nach einem der vorhergehenden Ansprüche 1 bis 3, **dadurch gekennzeichnet, dass** die Stützbeine (2) mit Balken (4) des Rahmens (3) mit Verbindern, vorzugsweise Schraubverbindern (16), verbunden sind, die sich durch die betreffenden Balken (4) und in Verlängerungen (17) auf der Oberseite der aufrechten Stützbeine (2) in einem Winkel von etwa 45° in Bezug auf diese aufrechten Stützbeine (2) erstrecken.

## Revendications

1. Table de bureau (1) mise en œuvre avec des pieds de support (2) et un bâti (3) auquel les pieds de support (2) sont raccordés ou peuvent être raccordés, où le bâti (3) comprend plusieurs poutres (4) pour supporter un plateau (5), où on trouve des moyens (6, 7) pour monter le plateau (5) sur le bâti (3) dans une position fixe comprenant un premier (6) et un second (7) moyen de fixation qui sont raccordés au bâti (3) et au plateau (5) respectivement, où ledit premier moyen de fixation (6) et ledit second moyen de fixation (7) sont agencés pour être mobiles entre une première position dans laquelle le premier moyen de fixation (6) et le second moyen de fixation (7) sont raccordés, et une seconde position dans laquelle le premier moyen de fixation (6) et le second moyen de fixation (7) sont déconnectés, où les premiers moyens de fixation (6) sont mis en œuvre sous la forme d'un bloc de montage (8) qui est raccordé au bâti (3), ledit bloc de montage (8) étant prévu avec une ouverture (9) pour y recevoir le second moyen de fixation (7) qui est raccordé au plateau (5), ledit second moyen de fixation (7) étant mis en œuvre sous la forme d'une broche (10) comprenant un col (11) et une extrémité (12) montée sur ledit col (11) au niveau d'un côté de la broche (10) qui est à distance du plateau (5), laquelle extrémité (12) a un plus grand diamètre que ledit col (11) de la broche (10), où le premier moyen de fixation (6) comprend un connecteur (13) qui est prévu avec une ouverture (15), une première partie (15') dont l'ouverture (15) a des dimensions inférieures à l'extrémité (12) montée sur le col (11) de la broche (10), et une seconde partie (15") dont l'ouverture (15) a des dimensions supérieures à l'extrémité (12) montée sur le col (11) de la broche (10) et lequel connecteur (13) est équipé pour coulisser transversalement le long du col (11) de la broche (10) vers la première position, dans laquelle la première partie (15') de l'ouverture (15) limite le mouvement de l'extrémité (12) de la broche (10) et fournit ainsi un raccordement entre le premier (6) et le second (7) moyen de fixation, où les poutres (4) du bâti (3) ont une ou plusieurs ouvertures (4') qui sont dimensionnées pour recevoir ledit bloc de montage ou des blocs de montage (8), **caractérisée en ce que** le connecteur (13) peut coulisser dans un corps (14) du bloc de montage (8) dans lequel il est reçu de manière à faire en sorte que son ouverture (15) est mobile entre la première position dans laquelle la première partie (15') de l'ouverture (15) du connecteur est amenée en mise en prise de blocage avec l'extrémité (12) de la broche (10), dans laquelle le bloc de montage (8) et la broche (10) sont raccordés, et la seconde position dans laquelle la seconde partie (15") de l'ouverture (15) du connecteur est alignée avec l'extrémité (12) sur le col (11) de la broche (10), dans laquelle le bloc de montage (8) et la broche (10) sont déconnectés.

2. Table de bureau (1) selon la revendication 1, **caractérisé en ce que** le connecteur (13) est reçu, de manière coulissante, dans un corps (14) du bloc de montage (8), et l'ouverture (9) du bloc de montage (8) est équipé pour y recevoir parfaitement la broche (10) comprenant un col (11) et une extrémité (12) montée sur ledit col (11).

3. Table de bureau (1) selon la revendication 1 ou 2, **caractérisé en ce que** le connecteur (13) est équipé avec une partie en saillie (13') qui s'encliquette derrière au niveau d'une surface externe (8') du bloc de montage (8) lorsque le connecteur (13) est placé dans la première position dans laquelle la première partie (15') de l'ouverture (15) du connecteur est amenée en mise en prise de blocage avec l'extrémité (12) de la broche (10), dans laquelle le bloc de montage (8) et la broche (10) sont raccordés, afin d'empêcher le mouvement du connecteur (13) à l'opposé de cette première position.

4. Table de bureau (1) selon l'une quelconque des revendications 1 à 3, **caractérisé en ce que** les pieds de support (2) sont raccordés avec les poutres (4) du bâti (3) avec des connecteurs, de préférence des connecteurs à vis (16), s'étendant à travers les poutres (4) en question et dans des extensions (17) sur la partie supérieure des pieds de support droits (2) à un angle d'approximativement 45° en référence auxdits pieds de support droits (2).
